# EUROPEAN PATENT APPLICATION

(11) **EP 3 816 219 A1**
(43) Date of publication of application: **05.05.2021**
(21) Application number: 18908813.1
(22) Date of filing: 17.07.2018
(51) Int. Cl.: C08L 1/14, C08K 5/10, C08L 33/04, C08L 67/04

(54) **RESIN COMPOSITION AND MOLDED RESIN OBJECT**

(30) Priority: 06.03.2018 JP 2018039551
(71) Applicant: Eastman Chemical Company, Kingsport, TN 37660 (US)
(72) Inventor: YAO Kenji, Minamiashigara-shi, Kanagawa 250-0111 (JP); TANAKA Ryo, Minamiashigara-shi, Kanagawa 250-0111 (JP); MIYAZAKI Kana, Minamiashigara-shi, Kanagawa 250-0111 (JP); MORIYAMA Masahiro, Minamiashigara-shi, Kanagawa 250-0111 (JP)
(74) Representative: Wallinger Ricker Schlotter Tostmann
(86) International application number: PCT/JP2018/026779
(87) International publication number: WO 2019/171610

(57) **Abstract**

A resin composition, including a cellulose acylate including at least one type selected from cellulose acetate propionate and cellulose acetate butyrate, a polylactic acid, an ester compound having a molecular weight of 250 or more and 2,000 or less, and a polymer with a core-shell structure having a core layer and a shell layer including a (meth)acrylic polymer on the surface of the core layer, wherein the ratio of the mass of the polylactic acid to the mass of the cellulose acylate is 0.03 or more and 0.5 or less, the ratio of the mass of the ester compound to the mass of the cellulose acylate is 0.03 or more and 0.15 or less, and the ratio of the mass of the polymer with a core-shell structure to the mass of the cellulose acylate is 0.01 or more and 0.1 or less.

## Description

### Technical Field

The present invention relates to a resin composition and a resin-molded body.

### Background Art

Conventionally, a variety of substances are provided as resin compositions, and these are used for various purposes. Resin compositions are used for various components, housings, and the like in items such as home appliances and automobiles in particular. Furthermore, thermoplastic resins are also used in components for items such as housings for office equipment and electronic and electrical equipment.

Plant-based resins have been utilized in recent years, and cellulose derivatives are one of the plant-based resins that are conventionally known.

For example, "a resin composition containing a cellulose ester resin, a compound including an adipate, and a polyhydroxyalkanoate resin" is disclosed in Patent Literature 1.

### Prior Art Literature

### Patent Literature

Patent Literature 1: Japanese Unexamined Patent Application Publication No. 2016-069423

### Summary of Invention

### Problem to be Solved by Invention

The bending modulus of elasticity of a resin-molded body is improved by making a resin composition obtained by mixing a cellulose acylate, including at least one type selected from cellulose acetate propionate and cellulose acetate butyrate, and polylactic acid. However, there are cases when a resin-molded body formed from this resin composition has low weld line strength and low Charpy impact strength, which is measured using a weld line (hereinafter referred to as "weld line impact strength"). Furthermore, even when an ester compound having a molecular weight of 250 or more and 2,000 or less is mixed in this resin composition, there are cases when the weld line impact strength is low. Furthermore, even if a polymer with a core-shell structure having a core layer and a shell layer including a (meth)acrylic polymer on the surface of the core layer is contained, there are cases when the weld line impact strength is low.

A problem of the present invention is to provide a resin composition, wherein the resin composition includes a cellulose acylate including at least one type selected from cellulose acetate propionate and cellulose acetate butyrate, a polylactic acid, an ester compound having a molecular weight of 250 or more and 2,000 or less, and a polymer with a core-shell structure having a core layer and a shell layer including a (meth)acrylic polymer on the surface of the core layer, and the resin composition is for obtaining a resin-molded body having improved weld line impact strength compared to when the ratio of the mass of the polylactic acid to the mass of the cellulose acylate is less than 0.03 or more than 0.5, the ratio of the mass of the ester compound having a molecular weight of 250 or more and 2,000 or less to the mass of the cellulose acylate is less than 0.03 or more than 0.15, or the ratio of the mass of the polymer with a core-shell structure to the mass of the cellulose acylate is less than 0.01 or more than 0.1, or compared to when the weld line impact strength is less than 10 kJ/m².

### Means for Solving Problem

The foregoing problem is solved by the following means.
<1> A first aspect of the present invention is a resin composition, including:
   a cellulose acylate including at least one type selected from cellulose acetate propionate and cellulose acetate butyrate,
   a polylactic acid,
   an ester compound having a molecular weight of 250 or more and 2,000 or less, and
   a polymer with a core-shell structure having a core layer and a shell layer including a (meth)acrylic polymer on the surface of the core layer, wherein:
      the ratio ((B)/(A)) of the mass of the polylactic acid (B) to the mass of the cellulose acylate (A) is 0.03 or more and 0.5 or less, the ratio ((C)/(A)) of the mass of the ester compound (C) to the mass of the cellulose acylate (A) is 0.03 or more and 0.15 or less, and the ratio ((D)/(A)) of the mass of the polymer with a core-shell structure (D) to the mass of the cellulose acylate (A) is 0.01 or more and 0.1 or less.
<2> In the resin composition according to <1>, the weld line impact strength may be 10 kJ/m² or more, and a value obtained by dividing the weld line impact strength by Charpy impact strength may be 0.5 or more.
<3> Another aspect of the present invention is a resin composition, including:
   a cellulose acylate including at least one type selected from cellulose acetate propionate and cellulose acetate butyrate,
   a polylactic acid,
   an ester compound having a molecular weight of 250 or more and 2,000 or less, and
   a polymer with a core-shell structure having a core layer and a shell layer including a (meth)acrylic polymer on the surface of the core layer, wherein:
      the weld line impact strength is 10 kJ/m² or more, and a value obtained by dividing the weld line impact strength by Charpy impact strength is 0.5 or more.
<4> In the resin composition according to any of <1> to <3>, the ester compound may be a fatty acid ester compound.
<5> In the resin composition according to <4>, the fatty acid ester compound may be a compound containing an adipate.
<6> The resin composition according to any of <1> to <5> may further include (meth)acrylic polymer not contained in the shell layer.
<7> In the resin composition according to <6>, the (meth)acrylic polymer not contained in the shell layer is a polymer having a structural unit derived from an alkyl (meth)acrylate, and the ratio ((E)/(A)) of the mass of the polymer having a structural unit derived from the alkyl (meth)acrylate (E) to the mass of the cellulose acylate (A) is 0.01 or more and 0.1 or less.
<8> In the resin composition according to <6> or <7>, the weight-average molecular weight of the (meth)acrylic polymer not contained in the shell layer may be 30,000 or less.
<9> In the resin composition according to any of <1> to <8>, the (meth)acrylic polymer contained in the shell layer of the polymer with a core-shell structure may include an alkyl (meth)acrylate wherein the number of carbon atoms in the alkyl chain is 1 or more and 8 or less.
<10> In the resin composition according to any of <1> to <9>, the (meth)acrylic polymer contained in the shell layer of the polymer with a core-shell structure may include a copolymer of two or more types of an alkyl (meth)acrylate wherein the number of carbon atoms in the alkyl chains is different.
<11> Another aspect of the present invention is a resin-molded body, including the resin composition according to any of <1> to <10>.
<12> The resin-molded body according to <11> may be an injection-molded body.

### Effect of Invention

According to aspect <1>, a resin-molded body is provided having improved weld line impact strength compared to when - in a resin composition including a cellulose acylate including at least one type selected from cellulose acetate propionate and cellulose acetate butyrate, a polylactic acid, an ester compound having a molecular weight of 250 or more and 2,000 or less, and a polymer with a core-shell structure having a core layer and a shell layer including a (meth)acrylic polymer on the surface of the core layer - the ratio of the mass of the polylactic acid to the mass of the cellulose acylate is less than 0.03 or more than 0.5, the ratio of the mass of the ester compound to the mass of the cellulose acylate is less than 0.03 or more than 0.15, or the ratio of the mass of the polymer with a core-shell structure to the mass of the cellulose acylate is less than 0.01 or more than 0.1.

According to aspects <2> and <3>, the resin-molded body is provided having improved weld line impact strength compared to when - in the resin composition including a cellulose acylate including at least one type selected from cellulose acetate propionate and cellulose acetate butyrate, a polylactic acid, an ester compound having a molecular weight of 250 or more and 2,000 or less, and a polymer with a core-shell structure having a core layer and a shell layer including a (meth)acrylic polymer on the surface of the core layer - the weld line impact strength is less than 10 kJ/m².

According to aspects <4> and <5>, the resin composition is provided for obtaining the resin-molded body having improved weld line impact strength compared to when the ratio of the mass of the polylactic acid to the mass of the cellulose acylate is less than 0.03 or more than 0.5, the ratio of the mass of the ester compound to the mass of the cellulose acylate is less than 0.03 or more than 0.15, or the ratio of the mass of the polymer with a core-shell structure to the mass of the cellulose acylate is less than 0.01 or more than 0.1, or compared to when the weld line impact strength is less than 10 kJ/m², and wherein the ester compound is a fatty acid ester compound.

According to aspects <6>, <7>, and <8>, the resin-molded body is provided having an improved bending modulus of elasticity compared to when the resin composition includes a cellulose acylate including at least one type selected from cellulose acetate propionate and cellulose acetate butyrate, a polylactic acid, an ester compound having a molecular weight of 250 or more and 2,000 or less, and only a core layer and a shell layer including a (meth)acrylic polymer on the surface of the core layer.

According to aspects <9> and <10>, the resin composition is provided for obtaining the resin-molded body having improved weld line impact strength compared to when the ratio of the mass of the polylactic acid to the mass of the cellulose acylate is less than 0.03 or more than 0.5, the ratio of the mass of the ester compound to the mass of the cellulose acylate is less than 0.03 or more than 0.15, or the ratio of the mass of the polymer with a core-shell structure to the mass of the cellulose acylate is less than 0.01 or more than 0.1, or compared to when the weld line impact strength is less than 10 kJ/m², and wherein the (meth)acrylic polymer of the shell layer is a copolymer of an alkyl (meth)acrylate in which the number of carbon atoms in the alkyl chain is 1 or more and 8 or less, or two or more types of an alkyl (meth)acrylate in which the number of carbon atoms in the alkyl chains is different.

According to aspects <11> and <12>, the resin-molded body is provided having improved weld line impact strength compared to when - in the resin composition including a cellulose acylate including at least one type selected from cellulose acetate propionate and cellulose acetate butyrate, a polylactic acid, an ester compound having a molecular weight of 250 or more and 2,000 or less, and a polymer with a core-shell structure having a core layer and a shell layer including a (meth)acrylic polymer on the surface of the core layer - the ratio of the mass of the polylactic acid to the mass of the cellulose acylate is less than 0.03 or more than 0.5, the ratio of the mass of the ester compound to the mass of the cellulose acylate is less than 0.03 or more than 0.15, or the ratio of the mass of the polymer with a core-shell structure to the mass of the cellulose acylate is less than 0.01 or more than 0.1, or compared to when the weld line impact strength is less than 10 kJ/m².

### Embodiments of Invention

Embodiments that are examples of the resin composition and the resin-molded body of the present invention (in the present specification, these will be referred to as "present embodiment" for matters common to the first embodiment and the second embodiment) will be described below.

### <Resin Composition>

A resin composition of a first embodiment includes a cellulose acylate including at least one type selected from cellulose acetate propionate and cellulose acetate butyrate (hereinafter this may be referred to as "defined cellulose acylate"), a polylactic acid, an ester compound having a molecular weight of 250 or more and 2,000 or less (hereinafter this may be referred to as "defined ester compound"), and a polymer with a core-shell structure having a core layer and a shell layer including a (meth)acrylic polymer on the surface of the core layer (hereinafter this may be referred to as "polymer with a core-shell structure").

Also, the ratio ((B)/(A)) of the mass of the polylactic acid (B) to the mass of the cellulose acylate (A) is 0.03 or more and 0.5 or less. The ratio ((C)/(A)) of the mass of the ester compound (C) to the mass of the cellulose acylate (A) is 0.03 or more and 0.15 or less. The ratio ((D)/(A)) of the mass of the polymer with a core-shell structure (D) to the mass of the cellulose acylate (A) is 0.01 or more and 0.1 or less.

A resin composition of a second embodiment includes a cellulose acylate including at least one type selected from cellulose acetate propionate and cellulose acetate butyrate, a polylactic acid, an ester compound having a molecular weight of 250 or more and 2,000 or less, and a polymer with a core-shell structure having a core layer and a shell layer including a (meth)acrylic polymer on the surface of the core layer (hereinafter this may be referred to as "polymer with a core-shell structure").

Also, the weld line impact strength is 10 kJ/m² or more, and a value found by dividing the weld line impact strength by Charpy impact strength is 0.5 or more.

Note that in the present specification, "(meth)acrylic" is meant to include both "acrylic" and "methacrylic."

Conventionally, a cellulose acylate having a portion of a hydroxyl group substituted with an acyl group (an acylated cellulose derivative) is composed of a non-edible resource, and since this is a primary derivative that does not require chemical polymerization, it is an environmentally friendly resin material. Furthermore, due to its strong hydrogen bonding property, it has a high modulus of elasticity as a resin material.

However, even among cellulose acylates, cellulose acetate propionate and cellulose acetate butyrate tend to have a low bending modulus of elasticity, and thus there are cases when an improvement of the bending modulus of elasticity is required. In order to devise an improvement to the bending modulus of elasticity, it is effective to use these cellulose acylates as a resin composition (a so-called polymer alloy) including two or more types of polymer materials mixed with another resin. Thus, since they are used as a resin composition obtained by mixing a cellulose acylate of at least one type from cellulose acetate propionate and cellulose acetate butyrate (defined cellulose acylate) and polylactic acid, a resin-molded body having an improved bending modulus of elasticity is obtained.

The resin-molded body molded from the resin composition including two or more polymer materials has a weld line formed at a confluence portion where the flow of the molten resin composition merges due to the shape. The resin-molded body obtained from the resin composition created by mixing the defined cellulose acylate and polylactic acid also has a weld line formed at a confluence portion where the flow of the resin composition merges. Since the strength at the position where the weld line is formed (weld line strength) is low, there are cases when the Charpy impact strength measured at the position where the weld line is formed (hereinafter referred to as "Charpy impact strength") is low.

The following are considered to be causes for this. Fluidity is different between the defined cellulose acylate and polylactic acid, and there is a large difference in melt viscosity between the two. Therefore, affinity is low between the two, a defined cellulose acylate phase and a polylactic acid phase are formed, and the defined cellulose acylate phase forms a large domain. Thus, it is considered that weld line impact strength becomes low due to low strength at the interface between these phases.

Furthermore, when an ester compound having a molecular weight of 250 or more and 2,000 or less (defined ester compound) is further mixed into the polymer material obtained by mixing the defined cellulose acylate and polylactic acid, the defined ester compound selectively dissolves in the defined cellulose acylate phase due to the difference in affinity. By melting the defined ester compound, the melt viscosity of the defined cellulose acylate is reduced, and the difference in melt viscosity with the polylactic acid becomes smaller. As a result, the domain diameters of both the defined cellulose acylate phase including the defined ester compound and the polylactic acid phase become smaller, a state results where the compatibility of both phases improves, and Charpy impact strength improves. However, the weld line impact strength is low. It is considered difficult to improve the strength at the interface between both phases even when using a resin composition containing these components.

In contrast to this, the resin-molded body having improved weld line impact strength is obtained due to the resin composition of the present embodiment. The reason for this is not clear, but it is presumed to be as follows.

The resin composition of the present embodiment includes the polymer with a core-shell structure in addition to the foregoing three components. When the polymer with a core-shell structure is contained, the polarity of the (meth)acrylic polymer contained in the shell layer is close to the polarity of the polylactic acid; therefore, the polymer with a core-shell structure is likely to be present at the outer interface of the polylactic acid phase. Moreover, since the polarity of the (meth)acrylic polymer contained in the shell layer is close to the polarity of the defined ester compound, in the phase of the defined cellulose acylate including the defined ester compound, the defined ester compound becomes likely move to the outer interface of this phase. Also, the defined ester compound becomes likely to be present at the outer interface of the defined cellulose acylate phase including the defined ester compound, and the polymer with a core-shell structure is present at the interface between the defined cellulose acylate phase including the defined ester compound and the polylactic acid phase. Therefore, it is considered that the action of strength at the interface between both phases improving is expressed by the affinity between the defined ester compound and the shell layer of the polymer with a core-shell structure. It is presumed that this improves the weld line impact strength of the resin-molded body.

Furthermore, it was found that there are cases when the foregoing action is unlikely to be expressed by merely containing a polymer with a core-shell structure. Moreover, it was found that the foregoing action is unlikely to be expressed even if only the ratio of the polymer with a core-shell structure to the defined cellulose acylate is examined. Therefore, in the first embodiment, the weld line impact strength of the resin-molded body improves by adjusting the mass ratio of each component (polylactic acid, defined ester compound, and polymer with a core-shell structure) to the defined cellulose acylate to the above-described ranges. It is presumed that the foregoing action is expressed due to the mass ratio of each component to the defined cellulose acylate being within the above-described ranges, leading to a balance where the respective roles of each component are exhibited.

Furthermore, in the second embodiment, each of the above components are included, the weld line impact strength is 10 kJ/m² or more, and a value found by dividing the weld line impact strength by Charpy impact strength (weld line impact strength/Charpy impact strength) is 0.5 or more.

For example, if the value of the weld line impact strength/Charpy impact strength is too small, the weld line strength is too low at the position where the weld line is present compared to the position where there is no weld line, and the difference in impact strength increases. Therefore, from the viewpoint of excellent weld line strength, it is preferable that the difference in Charpy impact strength between the position where the weld line is present and the position where the weld line is not present is small. Furthermore, even if the difference in Charpy impact strength between the position where the weld line is present and the position where the weld line is not present is small, if the weld line impact strength itself is too low, the weld line strength will be low.

In contrast to this, the weld line impact strength is 10 kJ/m² or more, and moreover, the ratio of the weld line impact strength/Charpy impact strength is 0.5 or more. Therefore, the resin-molded body has high weld line impact strength, the difference in impact strength between the position where the weld line of the resin-molded body is present and the position where the weld line is not present is small, and the weld line impact strength is improved. This is, as described above, presumed to be because the strength at the interface between both phases is improved due to the affinity between the defined ester compound present at the outer interface of the defined cellulose acylate phase including the defined ester compound, and the polymer with a core-shell structure present at the interface between the defined cellulose acylate phase including the defined ester compound and the polylactic acid phase.

From the above, regarding the resin-molded body of the present embodiment, it is presumed that the resin-molded body may be obtained with improved weld line impact strength.

Hereinafter, the components of the resin composition of the present embodiment will be described in detail.

### [Defined Cellulose Acylate]

In the resin composition of the present embodiment, the defined cellulose acylate includes at least one type selected from cellulose acetate propionate and cellulose acetate butyrate. In other words, either of cellulose acetate propionate and cellulose acetate butyrate may be contained, or both cellulose acetate propionate and cellulose acetate butyrate may be used in combination.

Cellulose acetate propionate is a cellulose derivative in which a portion of the hydroxyl group is substituted with an acetyl group and a propionyl group. Furthermore, cellulose acetate butyrate is a cellulose derivative in which a portion of the hydroxyl group is substituted with an acetyl group and a butyl group. The defined cellulose acylate is a cellulose derivative specifically represented by the following general formula (1).

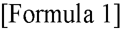

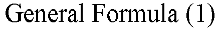

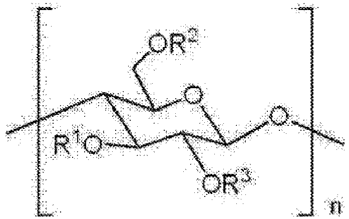

In general formula (1), R¹, R², and R³ each independently represent a hydrogen atom, or an acyl group (an acetyl group and a propionyl group, or an acetyl group and a butyryl group). n represents an integer of 2 or more. However, at least a portion from among R¹ of n, R² of n, and R³ of n represents an acyl group, and in the case of cellulose acetate propionate, the acyl group represents an acetyl group and a propionyl group. Furthermore, in the case of cellulose acetate butyrate, the acyl group represents an acetyl group and a butyryl group.

In general formula (1), the scope of n is not particularly limited, and 200 or more and 1,000 or less is given as an example. The scope of n may be 500 or more and 1,000 or less.

### - Weight-Average Degree of Polymerization -

From the viewpoint of an improvement to the weld line impact strength of the resin-molded body, the weight-average degree of polymerization of the defined cellulose acylate is preferably 200 or more and 1,000 or less, and more preferably 500 or more and 1,000 or less.

Here, the weight-average degree of polymerization is found in the following procedure from the weight-average molecular weight (Mw).

First, the weight-average molecular weight (Mw) of the defined cellulose acylate is measured using tetrahydrofuran through conversion of polystyrene using a gel permeation chromatography device (GPC device: manufactured by Tosoh Corporation, HLC-8320GPC, column: TSKgelα-M). Next, the degree of polymerization of the defined cellulose acylate is found by dividing by the molecular weight of the constitutional units of the defined cellulose acylate.

### - Degree of Substitution -

From the viewpoint of an improvement to the weld line impact strength of the resin-molded body, the degree of substitution of the defined cellulose acylate is preferably 2.1 or more and 2.8 or less, and the degree of substitution is more preferably 2.2 or more and 2.8 or less, even more preferably 2.3 or more and 2.75 or less, and particularly preferably 2.35 or more and 2.75 or less.

Here, the degree of substitution is an indicator for indicating the degree to which a hydroxyl group of cellulose is substituted with an acyl group. In other words, the degree of substitution serves as an indicator for indicating the degree of acylation of the defined cellulose acylate. Specifically, degree of substitution means an intramolecular average number of substitutions in which three hydroxyl groups in D-glucopyranose units of cellulose acylate are substituted with an acyl group.

Also, the degree of substitution is measured from the integral ratio of cellulosederived hydrogen and acyl group-derived peaks using H¹-NMR (manufactured by JMN-ECA/JEOL RESONANCE Co., Ltd.).

### - Content of the Propionyl Group -

From the viewpoint of an improvement to the weld line impact strength of the resin-molded body, in cellulose acetate propionate, the content of the propionyl group to cellulose acetate propionate is sufficient at 39% by mass or more and 51% by mass or less, preferably 40% by mass or more and 50% by mass or less, and more preferably 41% by mass or more and 49% by mass or less.

### - Ratio of the Content of the Propionyl Group to the Content of the Acetyl Group -

From the viewpoint of an improvement to the weld line impact strength of the resin-molded body, in cellulose acetate propionate, the ratio of the degree of substitution between the acetyl group and the propionyl group (acetyl group/propionyl group) is preferably 5/1 or more and 1/20 or less, and more preferably 3/1 or more and 1/15 or less.

### - Content of the Butyryl Group -

From the viewpoint of an improvement to the weld line impact strength of the resin-molded body, in cellulose acetate butyrate, the content of the propionyl group to cellulose acetate butyrate is sufficient at 15% by mass or more and 55% by mass or less, while 16% by mass or more and 54% by mass or less is preferable.

### - Ratio of the Content of the Butyryl Group and the Content of the Acetyl Group -

From the viewpoint of an improvement to the weld line impact strength of the resin-molded body, in cellulose acetate butyrate, the ratio of the degree of substitution between the acetyl group and the butyryl group (acetyl group/butyryl group) is preferably 5/1 or more and 1/20 or less, and more preferably 4/1 or more and 1/15 or less.

Here, the content of the acetyl group, the content of the propionyl group, and the content of the butyryl group are found by the following method. Cellulose acetate propionate or cellulose acetate butyrate is analyzed using H¹-NMR (manufactured by JMN-ECA/JEOL RESONANCE Co., Ltd.). In the case of cellulose acetate propionate, calculations are carried out from the integrated values of the acetyl group-derived peak and the propionyl group-derived peak, and the hydroxyl group-derived peak. In the case of cellulose acetate butyrate, calculations are carried out from the integrated values of the acetyl group-derived peak and the butyryl group-derived peak, and the hydroxyl group-derived peak.

Also, the mass ratio of both is found from the content of the propionyl group or butyryl group, and the content of the acetyl group found using this method.

The method of producing the defined cellulose acylate is not particularly limited, and a method of performing acylation, conversion into a low molecular weight (depolymerization), as well as deacetylation if necessary, with respect to cellulose is given as an example. Furthermore, production may be carried out by performing conversion into a low molecular weight (depolymerization) or the like on commercially available cellulose acetate propionate or commercially available cellulose acetate butyrate so as to achieve a predetermined weight-average molecular weight.

### [Polylactic Acid]

Polylactic acid is a polymer compound obtained by polymerizing lactic acid through ester linkages.

Examples of polylactic acids include poly-L-lactic acid having its structural unit derived from L-lactic acid, poly-D-lactic acid having its structural unit derived from D-lactic acid, and poly-DL-lactic acid having its structural unit derived from L-lactic acid and D-lactic acid, or the like, as well as mixtures of these. Furthermore, a monomer copolymerizable together with L-lactic acid or D-lactic acid rather than L-lactic acid and D-lactic acid may be copolymerized with at least one of L-lactic acid and D-lactic acid.

The monomer is not particularly limited, and the following are given as examples of monomers copolymerizable together with the foregoing L-lactic acid or D-lactic acid. Specifically, examples include a polycarboxylic acid such as glycolic acid, dimethyl glycolic acid, 3-hydroxybutyric acid, 4-hydroxybutyric acid, 2-hydroxypropanoic acid, 3-hydroxypropanoic acid, 2-hydroxyvaleric acid, 3-hydroxyvaleric acid, 4-hydroxyvaleric acid, oxalic acid, malonic acid, succinic acid, glutaric acid, adipic acid, pimelic acid, azelaic acid, sebacic acid, undecanoic acid, dodecanoic acid, and terephthalic acid, and anhydrides of these; a polyhydric alcohol such as ethylene glycol, diethylene glycol, triethylene glycol, 1,2-propanediol, 1,3-propanediol, 1,3-butanediol, 1,4-butanediol, 2,3-butanediol, 1,5-pentanediol, 1,6-hexanediol, 1,9-nonanediol, 3-methyl-1,5-pentanediol, neopentyl glycol, tetramethylene glycol, and 1,4-hexanedimethanol; a polysaccharide such as cellulose; an aminocarboxylic acid such as α-amino acids; a hydroxycarboxylic acid such as 5-hydroxyvaleric acid, 2-hydroxycaproic acid, 3-hydroxycaproic acid, 4-hydroxycaproic acid, 5-hydroxycaproic acid, 6-hydroxycaproic acid, 6-hydroxymethyl-caproic acid, and mandelic acid; or a cyclic ester such as glycolide, *β*-methyl-*δ*-valerolactone, *γ*-valerolactone, *ε*-caprolactone; or the like.

The polymerization method of polylactic acid is not particularly limited, and well-known methods such as a polycondensation method and a ring-opening polymerization method are given as examples. For example, polylactic acid may be produced by a ring-opening polymerization method using lactide, which is a cyclic dimer of lactic acid; a polycondensation method for direct dehydration polycondensation of at least one type of L-lactic acid and D-lactic acid; or the like.

From the viewpoint of an improvement to the weld line impact strength of the resin-molded body, the weight-average molecular weight (Mw) of polylactic acid is sufficient at 50,000 or more and 300,000 or less, it is preferably 75,000 or more and 250,000 or less, and more preferably 100,000 or more and 200,000 or less.

From the viewpoint of an improvement to the weld line impact strength of the resin-molded body, the average degree of polymerization of polylactic acid is sufficient at 700 or more and 4,200 or less, and it is preferably 1,400 or more and 2,800 or less.

The weight-average molecular weight (Mw) of polylactic acid is a value measured by gel permeation chromatography (GPC). Specifically, the molecular weight measurement by GPC is performed using a chloroform solvent, using HPC-8320GPC manufactured by Tosoh (Corp.) as the measurement device, and TSKgel GMHHR-M+ TSKgel GMHHR-M (7.8 mml.D.30 cm) columns manufactured by Tosoh (Corp.). Also, the weight-average molecular weight (Mw) is calculated using a molecular weight calibration curve created from a monodisperse polystyrene standard sample based on this measurement result.

### [Defined Ester Compound]

The defined ester compound is a compound having an ester group (-C(=O)O-), and having a molecular weight of 250 or more and 2,000 or less (preferably 250 or more and 1,000 or less, and more preferably 250 or more and 600 or less). The resin composition of the present embodiment includes at least one type or more of the defined ester compound. Note that when two or more types of defined ester compounds are used in combination, ester compounds each having a molecular weight of 250 or more and 2,000 or less are used in combination.

Examples of the defined ester compound include a fatty acid ester compound, an aromatic carboxylic acid ester compound, or the like. Even among these, from the viewpoint of an improvement to the weld line impact strength of the obtained resin-molded body, a fatty acid ester compound is preferable as the defined ester compound.

Examples of the fatty acid ester compound include an aliphatic monocarboxylic acid ester (acetic acid esters or the like), an aliphatic dicarboxylic acid ester (succinates, adipate-containing compounds, azelaic acid esters, sebacic esters, stearates, or the like), an aliphatic tricarboxylic acid ester (citrates, isocitrates or the like), an ester-containing epoxidized compound (epoxidized soybean oil, epoxidized linseed oil, epoxidized rapeseed fatty acid isobutyl, or epoxidized fatty acid 2-ethylhexyl), a fatty acid methyl ester, a sucrose ester, or the like.

Examples of the aromatic carboxylic acid ester compound include dimethyl phthalate, diethyl phthalate, Bis(2-ethylhexyl) phthalate, terephthalate, or the like.

Even among these, from the viewpoint of an improvement to the weld line impact strength of the obtained resin-molded body, for the defined ester compound, an aliphatic dicarboxylic acid ester and an aliphatic tricarboxylic acid ester are preferable, an adipate-containing compound and a citrate are more preferable, and an adipate-containing compound is even more preferable.

An adipate-containing compound (a compound including an adipate) indicates a compound of an adipate alone, or a mixture of an adipate and a component other than an adipate (a compound different to an adipate). However, it is sufficient for the adipate-containing compound to include 50% by mass or more of an adipate with respect to all components.

An adipic acid diester is given as an example of the adipate. Specifically, an adipic acid diester or the like represented by the following general formula (AE) is given as an example.

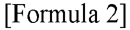

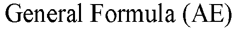

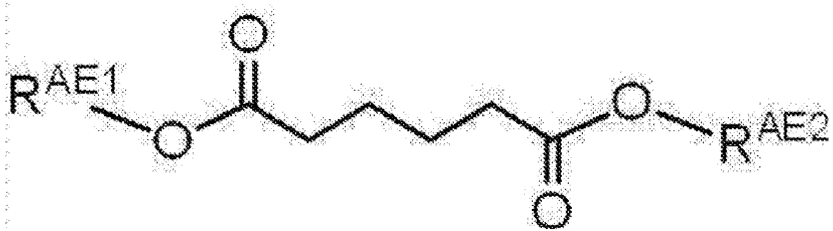

In general formula (AE), R^{AE1} and RA^{E2} each independently represent an alkyl group, or a polyoxyalkyl group [-(CₓH₂ₓ-O)_{y}-R^{A1}] (however, R^{A1} represents an alkyl group, x represents an integer of 1 or more and 10 or less, and y represents an integer of 1 or more and 10 or less).

In general formula (AE), the alkyl groups represented by R^{AE1} and R^{AE2} are preferably alkyl groups wherein the number of carbon atoms is 1 or more and 6 or less, and more preferably alkyl groups wherein the number of carbon atoms 1 or more and 4 or less. The alkyl groups represented by R^{AE1} and R^{AE2} may be any of a linear shape, branched shape, and cyclic shape, but a linear shape or branched shape is preferable.

In general formula (AE), in the polyoxyalkyl groups represented by R^{AE1} and R^{AE2} [-(CₓH_{2X}-O)_{y}-R^{A1}], the alkyl group represented by R^{A1} is preferably an alkyl group wherein the number of carbon atoms is 1 or more and 6 or less, and more preferably an alkyl group wherein the number of carbon atoms is 1 or more and 4 or less. The alkyl group represented by R^{A1} may be any of a linear shape, branched shape, and cyclic shape, but a linear shape or branched shape is preferable.

In general formula (AE), the groups represented by each reference numeral may be substituted with a substituent group. Examples of the substituent group include an alkyl group, an aryl group, and a hydroxyl group, or the like.

Meanwhile, an alkyl ester of citric acid wherein the number of carbon atoms is 1 or more and 12 or less (preferably 1 or more and 8 or less) is given as an example of a citrate. The citrate may be a citrate acylated using an alkyl carboxylic acid anhydride (for example, a linear or branched alkyl carboxylic acid anhydride wherein the number of carbon atoms is 2 or more and 6 or less (preferably 2 or more and 3 or less), such as acetic anhydride, propionic anhydride, butyric anhydride, and valeric anhydride).

### [Polymer With a Core-Shell Structure]

The polymer with a core-shell structure has a core layer and a shell layer including a (meth)acrylic polymer on the surface of the core layer. From the viewpoint of an improvement to the weld line impact strength, it is sufficient that the polymer with a core-shell structure has, for example, elasticity at room temperature (25°C) and the same softening property as thermoplastic resins at high temperatures (thermoplastic elastomers).

### (Polymer With a Core-Shell Structure)

The polymer with a core-shell structure is a polymer with a core-shell structure having a core layer and a shell layer on the surface of the core layer.

The polymer with a core-shell structure is a polymer wherein the core layer is the innermost layer, and the shell layer is the outermost layer (for example, it may be a polymer formed as the shell layer by graft polymerizing the polymer of alkyl (meth)acrylate to a polymer serving as the core layer).

Note that there may be one or more other layers (for example, 1 or more and 6 or less other layers) between the core layer and the shell layer. Note that if there are other layers, the polymer with a core-shell structure may be a multi-layered polymer wherein a plurality of types of polymers is graft polymerized to the polymer serving as the core layer.

Although the core layer is not particularly limited, it is preferably a rubber layer. Examples of the rubber layer include a layer of (meth)acrylic rubber, silicone rubber, styrene rubber, conjugated diene rubber, α-olefin rubber, nitrile rubber, urethane rubber, polyester rubber, polyamide rubber, a copolymer rubber of two or more types of these, or the like.

Even among these, the rubber layer is preferably a layer of (meth)acrylic rubber, silicone rubber, styrene rubber, conjugated diene rubber, α-olefin rubber, a copolymer rubber of two or more types of these, or the like.

Note that the rubber layer may be a rubber layer cross-linked by copolymerizing a cross-linking agent (divinylbenzene, allyl acrylate, butylene glycol diacrylate, or the like).

A polymer rubber obtained by polymerizing a (meth)acrylic component (for example, an alkyl ester of (meth)acrylic acid wherein the number of carbon atoms is 2 or more and 6 or less, or the like) is given as an example of the (meth)acrylic rubber.

A rubber configured of a silicon component (polydimethylsiloxane, polyphenylsiloxane, or the like) is given as an example of the silicon rubber.

A polymer rubber obtained by polymerizing a styrene component (styrene, α-methylstyrene, or the like) is given as an example of the styrene rubber.

A polymer rubber obtained by polymerizing a conjugated diene component (butadiene, isoprene, or the like) is given as an example of the conjugated diene rubber.

A polymer rubber obtained by polymerizing an α-olefin component (ethylene, propylene, and 2-methylpropylene) is given as an example of the α-olefin rubber.

A copolymer rubber obtained by polymerizing two or more types of (meth)acrylic components, a copolymer rubber obtained by polymerizing a (meth)acrylic component and a silicon component, and a copolymer rubber of a (meth)acrylic component, a conjugated diene component, and a styrene component, or the like, are given as examples of the copolymer rubber.

Examples of the alkyl (meth)acrylate in the polymer of alkyl (meth)acrylate contained in the shell layer include methyl (meth)acrylate, ethyl (meth)acrylate, n-propyl (meth)acrylate, n-butyl (meth)acrylate, t-butyl (meth)acrylate, n-hexyl (meth)acrylate, 2-ethylhexyl (meth)acrylate, cyclohexyl (meth)acrylate, stearyl (meth)acrylate, octadecyl (meth)acrylate, or the like. For the alkyl (meth)acrylate, at least a portion of hydrogen in the alkyl chain may be substituted. Examples of the substituent thereof include an amino group, a hydroxyl group, a halogen group, or the like.

Even among these, from the viewpoint of an improvement to the weld line impact strength of the obtained resin-molded body, a polymer of alkyl (meth)acrylate wherein the number of carbon atoms in the alkyl chain is 1 or more and 8 or less is preferable as the polymer of alkyl (meth)acrylate, a polymer of alkyl (meth)acrylate wherein the number of carbon atoms in the alkyl chain is 1 or more and 2 or less is more preferable, and a polymer of alkyl (meth)acrylate wherein the number of carbon atoms in the alkyl chain is 1 is even more preferable. A copolymer of two or more types of alkyl acrylate wherein the number of carbon atoms in the alkyl chains is different particularly preferable.

The content of the polymer of the shell layer in the polymer with a core-shell structure, with respect to the entire polymer with a core-shell structure, is preferably 1% by mass or more and 40% by mass or less, more preferably 3% by mass or more and 30% by mass or less, and even more preferably 5% by mass or more and 15% by mass or less.

A commercially available product may be used for the polymer with a core-shell structure of the present embodiment, or one may be produced by a well-known method.

"METAPRENE" manufactured by Mitsubishi Chemical Corporation, "Kane Ace" manufactured by Kaneka, and "PARALOID" manufactured by The Dow Chemical Company, or the like, are given as examples of commercially available products. These may be used alone or in a combination of two or more types.

An emulsion polymerization method is given as an example of a well-known method. Specifically, the following method is exemplified as a production method. First, after emulsion-polymerizing a mixture of monomers to form core particles (core layer), another mixture of monomers is emulsion-polymerized in the presence of the core particles (core layer) to obtain a polymer with a core-shell structure wherein a shell layer is formed around the core particles (core layer).

Furthermore, when forming another layer between the core layer and the shell layer, emulsion polymerization of another mixture of monomers is repeated to obtain the polymer with a core-shell structure configured from the target core layer, other layers, and shell layer.

Although the average primary particle size of the polymer with a core-shell structure of the present embodiment is not particularly limited, from the viewpoint of an improvement to the weld line impact strength of the obtained resin-molded body, 50 nm or more and 500 nm or less is preferable, and moreover, 50 nm or more and 400 nm or less is more preferable, 100 nm or more and 300 nm or less is particularly preferable, and 150 nm or more and 250 nm or less is most preferable.

Note that average primary particle size refers to a value measured by the following method. Particles are observed using a scanning electron microscope, the maximum size of the primary particles is taken as the primary particle size, then the primary particle size of 100 particles is measured, and this is the averaged number average primary particle size. Specifically, this may be found by observing the dispersion morphology of the polymer with a core-shell structure in the resin composition using a scanning electron microscope.

### [(Meth)acrylic Polymer]

The resin composition of the present embodiment may contain, if necessary, a (meth)acrylic polymer in a matrix excluding the polymer with a core-shell structure. Note that if the (meth)acrylic polymer is contained in the matrix, the bending modulus of elasticity of the obtained resin-molded body is likely to improve.

In the present specification, the (meth)acrylic polymer is not particularly limited, and may be, for example, a polymer including a structural unit derived from a (meth)acrylate. Among these, the (meth)acrylic polymer is preferably a polymer including a structural unit derived from an alkyl (meth)acrylate. The (meth)acrylic polymer may, for example, be a homopolymer including only one type of structural unit derived from a (meth)acrylate, and may be a copolymer including one type or two or more types of structural units derived from a (meth)acrylate.

When the (meth)acrylic polymer is, for example, a copolymer including a structural unit derived from a (meth)acrylic polymer alkyl ester, the structural unit derived from the (meth)acrylic polymer alkyl ester, with respect to the total mass of copolymer, may be 50% by mass or more and 99% by mass or less (preferably 60% by mass or more and 95% by mass or less, and preferably 70% by mass or more and 95% by mass or less). Furthermore, a structural unit other than the structural unit derived from the (meth)acrylic polymer alkyl ester may be 1% by mass or more and 50% by mass or less (preferably 5% by mass or more and 40% by mass or less, and preferably 5% by mass or more and 30% by mass or less).

Examples of the structural unit derived from a (meth)acrylate of the (meth)acrylic polymer specifically include, for example, a structural unit derived from an alkyl (meth)acrylate such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, isopentyl (meth)acrylate, neopentyl (meth)acrylate, n-hexyl (meth)acrylate, isohexyl (meth)acrylate, n-heptyl (meth)acrylate, isoheptyl (meth)acrylate, n-octyl (meth)acrylate, isooctyl (meth)acrylate, n-decyl (meth)acrylate, n-dodecyl (meth)acrylate, and n-octadecyl (meth)acrylate, or the like; a structural unit derived from a phenyl (meth)acrylate such as phenyl (meth)acrylate and benzyl (meth)acrylate, or the like; or the like.

The upper limit of the weight-average molecular weight of the (meth)acrylic polymer is not particularly limited. From the viewpoint of obtaining a resin-molded body in which thermal deformation is suppressed while maintaining crack resistance, 30,000 or less is sufficient. Furthermore, the upper limit of the weight-average molecular weight may be less than 30,000, and may be 28,000 or less. Moreover, the lower limit value of the weight-average molecular weight of the (meth)acrylic polymer is not particularly limited, and 15,000 or more is given as an example. The lower limit of the weight-average molecular weight may be 20,000 or more. Furthermore, the bending modulus of elasticity is likely to improve further by using a (meth)acrylic polymer having a weight-average molecular weight of 30,000 or less.

The weight-average molecular weight of the (meth)acrylic polymer is a value measured by gel permeation chromatography (GPC). Specifically, the molecular weight measurement by GPC is performed using a tetrahydrofuran solvent, using HLC-8320GPC manufactured by Tosoh (Corp.) as the measurement device, and TSKgelα-M columns manufactured by Tosoh (Corp.). Also, the weight-average molecular weight is calculated using a molecular weight calibration curve created from a monodisperse polystyrene standard sample based on this measurement result.

### [Other Components]

The resin composition of the present embodiment may further include other components in addition to those described above, if necessary. Examples of such other components include flame retardants, compatibilizers, antioxidants, mold release agents, light resistance agents, weather-proofing agents, colorants, pigments, modifiers, anti-drip agents, antistatic agents, anti-hydrolysis agents, fillers, and reinforcing agents (such as glass fibers, carbon fibers, talc, clay, mica, glass flakes, milled glass, glass beads, crystalline silica, alumina, silicon nitride, aluminum nitride, and boron nitride), or the like.

Furthermore, components (additives) such as an acid acceptor for preventing the release of acetic acid and a reactive trapping agent may be added if necessary. Examples of acid acceptors include oxides such as magnesium oxide and aluminum oxide, or the like; metal hydroxides such as magnesium hydroxide, calcium hydroxide, aluminum hydroxide, and hydrotalcite, or the like; calcium carbonate; and talc; or the like.

Examples of reactive trapping agents include an epoxy compound, acid anhydride compound, and carbodiimide, or the like.

The content of each of these components is preferably 0% by mass or more and 5% by mass or less to the total amount of the resin composition. Here, "0% by mass" means that another component is not contained.

The resin composition of the present embodiment may contain another resin in addition to the foregoing resins (cellulose acetate propionate and polymethyl methacrylate). However, when another resin is included, 5% by mass or less is sufficient for the content of another resin to the total amount of the resin composition, and less than 1% by mass is preferable. It is more preferable that another resin is not contained (in other words, 0% by mass).

Examples of another resin include conventionally known thermoplastic resins, specifically, polycarbonate resin; polypropylene resin; polyester resin; polyolefin resin; polyester carbonate resin; polyphenylene ether resin; polyphenylene sulfide resin; polysulfone resin; polyether sulfone resin; polyarylene resin; polyetherimide resin; polyacetal resin; polyvinyl acetal resin; polyketone resin; polyether ketone resin; polyether ether ketone resin; polyaryl ketone resin; polyether nitrile resin; liquid crystal resin; polybenzimidazole resin; polyparabanic acid resin; vinyl-based polymer or copolymer obtained by polymerizing or copolymerizing one or more types of vinyl monomers selected from a group composed of aromatic alkenyl compounds, methacrylates, acrylates, and vinyl cyanide compounds; diene-aromatic alkenyl compound copolymer; vinyl cyanide-diene-aromatic alkenyl compound copolymer; aromatic alkenyl compound-diene-vinyl cyanide-N-phenylmaleimide copolymer; vinyl cyanide-(ethylene-propylene-diene (EPDM))-aromatic alkenyl compound copolymer; vinyl chloride resin; chlorinated vinyl chloride resin; or the like. Furthermore, a core-shell type butadiene-methyl methacrylate copolymer is also included. These resins may be used alone or in a combination of two or more types.

### [Mass Ratio of Each Component to Defined Cellulose Acylate]

For the resin composition of the first embodiment, the ratio ((B)/(A)) of the mass of the polylactic acid (B) to the mass of the defined cellulose acylate (A) is 0.03 or more and 0.5 or less.

Furthermore, the ratio ((C)/(A)) of the mass of the defined ester compound (C) to the mass of the cellulose acylate (A) is 0.03 or more and 0.15 or less.

Moreover, the ratio ((D)/(A)) of the mass of the polymer with a core-shell structure (D) to the mass of the cellulose acylate (A) is 0.01 or more and 0.1 or less.

From the viewpoint of an improvement to the weld line impact strength of the obtained resin-molded body, in the resin-molded body of the first embodiment, the foregoing (B)/(A) is preferably 0.03 or more and 0.3 or less, and more preferably 0.03 or more and 0.2 or less. From the same viewpoint, (C)/(A) is preferably 0.04 or more and 0.12 or less, and more preferably 0.05 or more and 0.1 or less. (D)/(A) is preferably 0.03 or more and 0.1 or less, and more preferably 0.03 or more and 0.07 or less.

From the viewpoint of an improvement to the weld line impact strength of the obtained resin-molded body, when the resin composition of the present embodiment includes a (meth)acrylic polymer, the ratio ((E)/(A)) of the mass of the (meth)acrylic polymer (E) to the mass of the defined cellulose acylate (A) is sufficient at 0.01 or more and 0.2 or less, and is preferably 0.03 or more and 0.15 or less.

Note that the content of the defined cellulose acylate, the polylactic acid, the ester compound having a molecular weight of 250 or more and 2,000 or less, and the polymer with a core-shell structure, as well as the mass ratio of each of these components to the defined cellulose acylate, is found by analyzing the resin composition and the resin-molded body subject to measurement using various analysis methods, such as mass spectrometry methods, including nuclear magnetic resonance (NMR), infrared spectroscopy (IR), liquid chromatograph-mass spectrometry (LC-MS), gas chromatograph-mass spectrometry (GC-MS), or the like. The same also is true when the resin composition and the resin-molded body include a (meth)acrylic polymer.

### [Weld Line Impact Strength]

In the present specification, weld line impact strength represents notched Charpy impact strength at a portion where the weld line of the resin-molded body is present. Specifically, it represents a value obtained by forming a notch at a portion where the weld line of the resin-molded body is present and measuring notched impact strength at 23°C.

The weld line impact strength of the resin composition of the second embodiment, as described above, is 10 kJ/m² or more, and a value found by dividing the weld line impact strength by Charpy impact strength (weld line impact strength/Charpy impact strength) is 0.5 or more. From the viewpoint of a greater improvement to the weld line impact strength, the weld line impact strength is preferably 12 kJ/m² or more, and more preferably 14 kJ/m² or more. The upper limit of the weld line impact strength is not particularly limited, and is sufficient at, for example, a value close to the same value as the Charpy impact strength at a portion where the weld line is not present.

Furthermore, from the viewpoint of a further improvement to the weld line impact strength, the weld line impact strength/Charpy impact strength is preferably 0.55 or more, more preferably 0.60 or more, and even more preferably 0.65 or more. The upper limit of the weld line impact strength/Charpy impact strength is not particularly limited. The weld line impact strength is preferably close to the Charpy impact strength at a portion where the weld line is not present. From this viewpoint, the upper limit of the weld line impact strength/Charpy impact strength is preferably close to 1.00.

For example, the following may be carried out to obtain a resin-molded body with a weld line impact strength of 10 kJ/m² or more and a weld line impact strength/Charpy impact strength of 0.5 or more. The defined cellulose acylate, the polylactic acid, the defined ester compound, and the polymer with a core-shell structure may be contained at a well-balanced ratio as a composition in the resin composition. Specifically, the mass ratio of each component to the above-described defined cellulose acylate (polylactic acid/defined cellulose acylate ((B)/(A)), defined ester compound/defined cellulose acylate ((C)/(A)), and polymer with a core-shell structure/defined cellulose acylate ((D)/(A))) is preferably contained at the above-described ratio.

The content of the defined cellulose acylate may be 50% by mass or more of the whole resin composition of the present embodiment, it may be 70% by mass or more, and it may be 90% by mass or more. Furthermore, in the resin composition of the present embodiment, the total content of the defined cellulose acylate, the polylactic acid, the ester compound having a molecular weight of 250 or more and 2,000 or less, and the polymer with a core-shell structure, as well as the (meth)acrylic polymer that may be included if necessary, may be 95% by mass or more to the whole resin composition, it may be 99% by mass or more, and it may be 100% by mass.

Note that the resin composition of the present embodiment is for obtaining a resin-molded body also having an excellent bending modulus of elasticity. For example, the bending modulus of elasticity may be 2,000 MPa or more, and may be 2,100 or more. The upper limit of the bending modulus of elasticity is not particularly limited, and may be, for example, 3,500 MPa or less, and may be 3,000 MPa or less.

### [Method of Producing Resin Composition]

The resin composition of the present embodiment has, for example, steps for preparing the resin composition including the defined cellulose acylate, the polylactic acid, the ester compound having a molecular weight of 250 or more and 2,000 or less, and the polymer with a core-shell structure.

The resin composition of the present embodiment is produced by melting and kneading a mixture including the defined cellulose acylate, the polylactic acid, the ester compound having a molecular weight of 250 or more and 2,000 or less, and the polymer with a core-shell structure, and if necessary, the (meth)acrylic polymer, other components, or the like. Additionally, the resin composition of the present embodiment is also produced, for example, by dissolving the foregoing components in a solvent.

Well-known means is given as the means of melting and kneading, and specifically, examples include using a twin screw extruder, Henschel mixer, Banbury mixer, single screw extruder, multi-screw extruder, ko-kneader, or the like.

### <Resin-Molded Body>

The resin-molded body of the present embodiment includes the resin composition of the present embodiment. In other words, the resin-molded body of the present embodiment is configured of the same composition as the resin composition of the present embodiment.

The method of molding the resin-molded body of the present embodiment is not particularly limited, and well-known molding methods include injection molding, extrusion molding, blow molding, heat press molding, calendar molding, coating molding, casting molding, dipping molding, vacuum molding, and transfer molding, or the like. The resin-molded body may be an injection-molded body and an extrusion molded body obtained by either of the injection molding and extrusion molding methods. From the viewpoint of having a high degree of freedom in terms of shape, the resin-molded body is preferably an injection-molded body obtained by injection molding.

The cylinder temperature for injection molding is, for example, 200°C or more and 300°C or less, and preferably 240°C or more and 280°C or less. The mold temperature for injection molding is, for example, 40°C or more and 90°C or less, and more preferably 60°C or more and 80°C or less.

Injection molding may be performed using a commercial device such as, for example, NEX500 manufactured by Nissei Plastic Industrial Co., Ltd., NEX150 manufactured by Nissei Plastic Industrial Co., Ltd., NEX70000 manufactured by Nissei Plastic Industrial Co., Ltd., PNX40 manufactured by Nissei Plastic Industrial Co., Ltd., and SE50D manufactured by Sumitomo Industries, Ltd., or the like.

The cylinder temperature for extrusion molding is, for example, 200°C or more and 300°C or less, and preferably 240°C or more and 280°C or less. A well-known device may be applied for extrusion molding.

The resin-molded body of the present embodiment is suitable for use in electronic and electrical equipment, office equipment, home appliances, automobile interior materials, toys, containers, and the like. More specifically, housings for electronic and electrical equipment and home appliances; various components for electronic and electrical equipment and home appliances; interior components for automobiles, block assembled toys; plastic models; storage cases for CD-ROMs, DVDs, and the like; tableware; drink bottles; food trays; wrapping materials; film; sheets; and the like.

### Examples

The present invention will be described in further detail by presenting examples below; however, the present invention is not limited to these examples. Note that "part" represents "parts by mass" unless otherwise noted.

### <Preparation of Defined Cellulose Acylate>

Three types of both cellulose acetate propionate (CAP1 to CAP3) and cellulose acetate butyrate (CAB1 to CAB3) were prepared. The prepared defined cellulose acylates are shown in Table 1. Note that the concentration measurements of the propionyl groups and butyryl groups were measured according to the method described above.

**[Table 1]**

| Cellulose Acylate Number | Product Name | Manufacturer | Propionyl Group (% by mass) | Butyryl Group (% by mass) |
|---|---|---|---|---|
| CAP1 | CAP482-20 | Eastman Chemical | 48 | 0 |
| CAP2 | CAP-482-0.5 | Eastman Chemical | 45 | 0 |
| CAP3 | CAP-504-0.2 | Eastman Chemical | 42,5 | 0 |
| CAB1 | CAB171-15 | Eastman Chemical | c | 17 |
| CAB2 | CAB381-20 | Eastman Chemical | 0 | 37 |
| CAB3 | CAB551-0.2 | Eastman Chemical | 0 | 52 |
| CA1 | L-5.0 | Daicel | 0 | 0 |

### (Preparation of Polylactic Acid)

Three types of polylactic acids were prepared. The prepared polylactic acids are shown in Table 2.

**[Table 2]**

| Polylactic Acid Number | Product Name | Manufacturer |
|---|---|---|
| PLA1 | Ingeo3001D | NatureWorks |
| PLA2 | TERRAMAC TE2000 | Unitika |
| PLA3 | LACEA H100 | Mitsui Chemicals |

### (Preparation of Ester Compound)

Three types of ester compounds were prepared. The prepared ester compounds are shown in Table 3.

**[Table 3]**

| Ester Compound Number | Product Name | Manufacturer | Molecular Weight | Structure |
|---|---|---|---|---|
| CE1 | Daifatty101 | Daihachi Chemical | 325 | Adipate-containing compound |
| CE2 | DOA | Daihachi Chemical | 370 | Diethylhexyl adipate |
| CE3 | DESU | Daihachi Chemical | 170 | Diethyl succinate |

### (Preparation of Polymer With a Core-Shell Structure)

Three types of polymers with a core-shell structure were prepared. The prepared polymers with a core-shell structure are shown in Table 4.

**[Table 4]**

| Polymer With a Core-Shell Structure Numbers | Product Name | Manufacturer |
|---|---|---|
| ARB1 | METAPRENE W600 | Mitsubishi Chemical |
| ARB2 | METAPRENE S2006 | Mitsubishi Chemical |
| ARB3 | PARALOID EXL2315 | Mitsubishi Chemical |

In Table 4, the structures of the polymers with a core-shell structure are as follows.
"METAPRENE W-600A (manufactured by Mitsubishi Chemical Corporation)": core layer; 2-ethylhexyl acrylate and n-butyl acrylate homocopolymer rubber/shell layer; methyl methacrylate homopolymer rubber; average primary particle size= 300 nm
"METAPRENE S-2006 (manufactured by Mitsubishi Chemical Corporation)": core layer; polymer rubber including polysiloxane as the polymerization component/shell layer; alkyl methacrylate; average primary particle size= 200 nm
"PARALOID EXL2315 (manufactured by The Dow Chemical Company)": core layer; butyl acrylate rubber/shell: methyl methacrylate polymer; average primary particle size= 300 nm

### (Preparation of (Meth)acrylic Polymer)

Three types of (meth)acrylic polymers were prepared. The prepared (meth)acrylic polymers are shown in Table 5.

**[Table 5]**

| (Meth)acrylic Polymer Number | Product Name | Manufacturer | Alkyl (Meth)acrylate-Derived Monomer (% by mass) | Weight-Average Molecular Weight (Mw) |
|---|---|---|---|---|
| ARE1 | DELPET 720V | Asahi Kasei | 100 | 55000 |
| ARE2 | DELPOWDER 500V | Asahi Kasei | 100 | 25000 |
| ARE3 | SUMIPEX MHF | Sumitomo Chemical Industry | 100 | 95000 |

### <Examples 1 to 32, Comparative Examples 1 to 17>

### - Kneading and Injection Molding -

The cylinder temperature was adjusted according to Table 8 and Table 9 at the prepared composition ratios shown in Table 6 and Table 7, and kneading was implemented using a two-axis kneading device (TEX41SS manufactured by Toshiba Machine Co., Ltd.) to obtain a resin composition (pellets).

Using the obtained pellets, an injection molding device (NEX140III manufactured by Nissei Plastic Industrial Co., Ltd.) was used to mold the resin-molded bodies of the following (1), whereby injection peak pressure did not exceed 180 MPa, and at the molding temperatures (cylinder temperature) and mold temperatures shown in Table 8 and Table 9. Moreover, the resin-molded bodies of the following (2) were molded using a mold with gates on both sides in the longitudinal direction.
- (1) Molded ISO multipurpose dumbbells (measured portions: width 10 mm x thickness 4 mm).
- (2) Molded ISO multipurpose test pieces with a weld line, wherein the weld line is at the center in the longitudinal direction (measured portions: width 10 mm x 4 mm).

### [Evaluation]

### - Weld Line Impact Strength -

The obtained ISO multipurpose dumbbells with a weld line underwent notch processing using a notching tool (A4E manufactured by Toyo Seiki Seisaku-sho, Ltd.) by a method according to ISO 179-1 (2010) so that the remaining width of notched test pieces with a single notch, notch type A, became 8 mm, such that a notch was formed at the weld line portion. Also, the test pieces were installed so as to incur edgewise impact using an impact strength measuring device (Charpy Auto-Impact Tester CHN3 manufactured by Toyo Seiki Seisaku-sho, Ltd.), and notched impact strength (weld line impact strength) at 23°C was measured.

### - Charpy Impact Strength -

The obtained ISO multipurpose dumbbells underwent notch processing using a notching tool (A4E manufactured by Toyo Seiki Seisaku-sho, Ltd.) by the method according to ISO 179-1 (2010) so that the remaining width of notched test pieces with a single notch, notch type A, became 8 mm. Also, the test pieces were installed so as to incur edgewise impact using an impact strength measuring device (Charpy Auto-Impact Tester CHN3 manufactured by Toyo Seiki Seisaku-sho, Ltd.), and notched impact strength (weld line impact strength) at 23°C was measured.

### - Weld Line Impact Strength/Charpy Impact Strength -

Furthermore, a value obtained by dividing the value of the weld line impact strength measured in each example by Charpy impact strength was measured (weld line impact strength/Charpy impact strength).

### - Bending Modulus of Elasticity -

The obtained ISO multipurpose dumbbells were measured for bending modulus of elasticity at 23°C by the method according to ISO 178 (2010) using a universal testing device (Autograph AG-Xplus manufactured by Shimadzu (Corp.)).

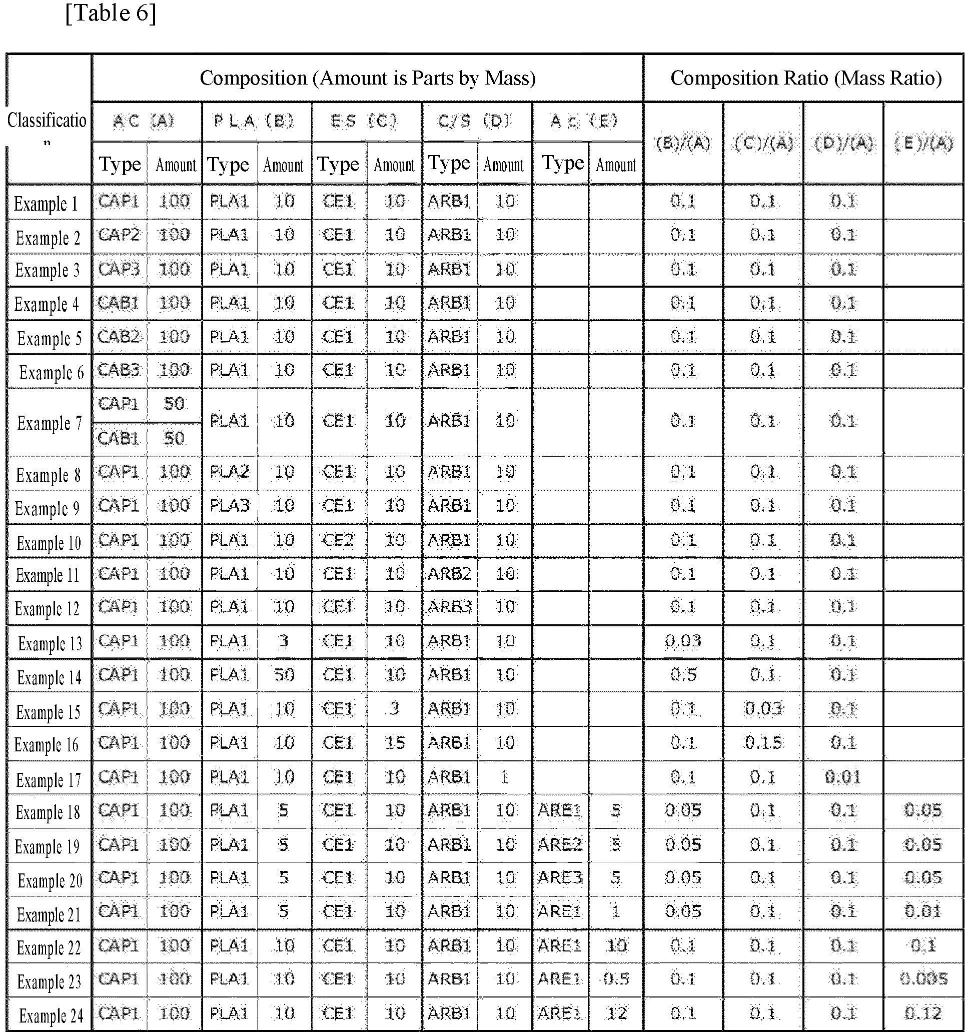

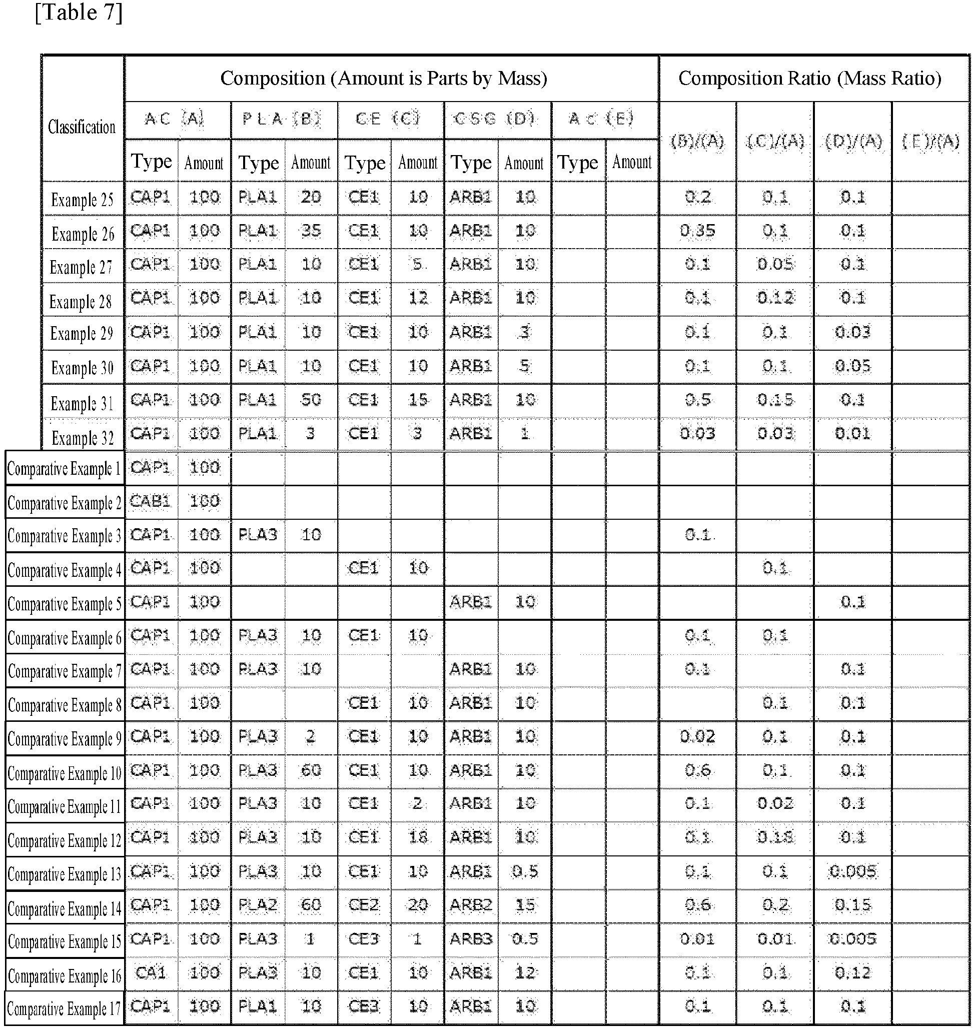

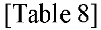

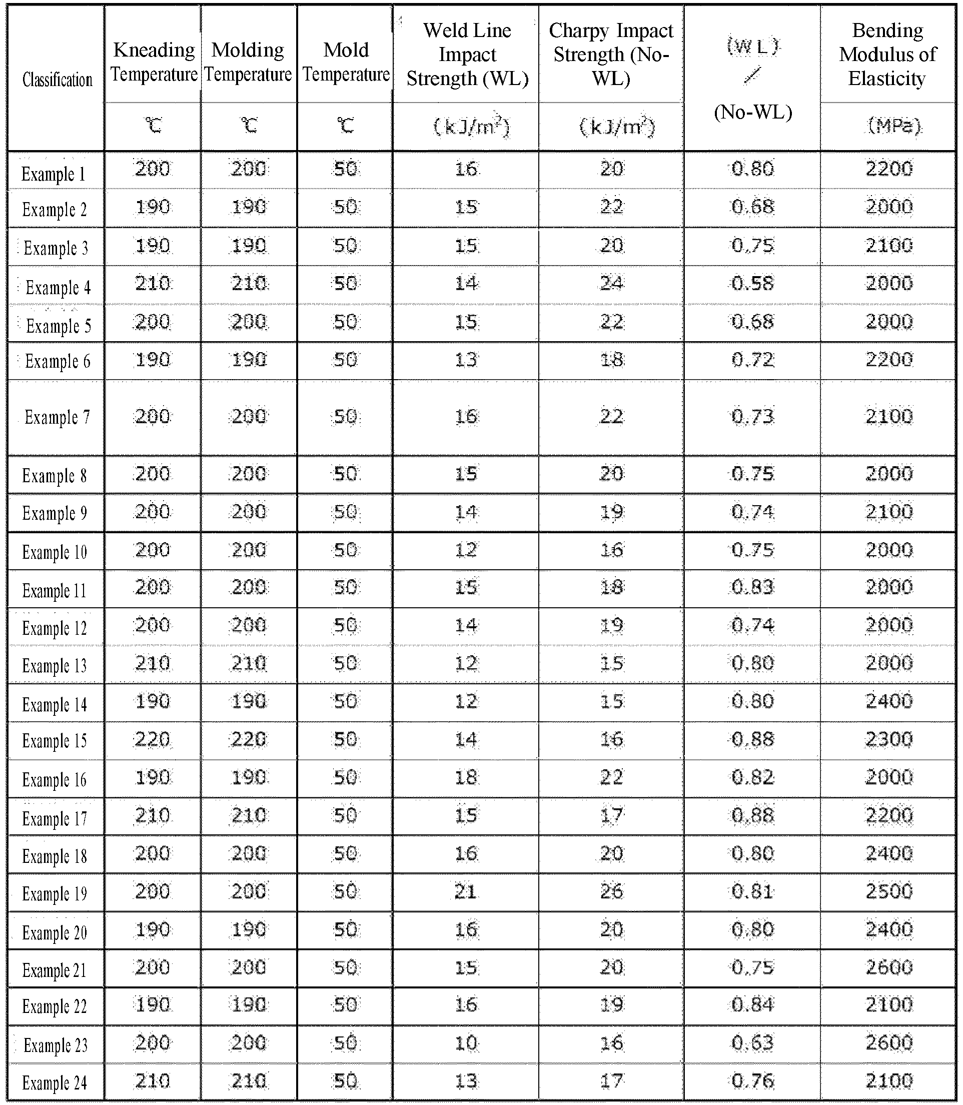

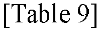

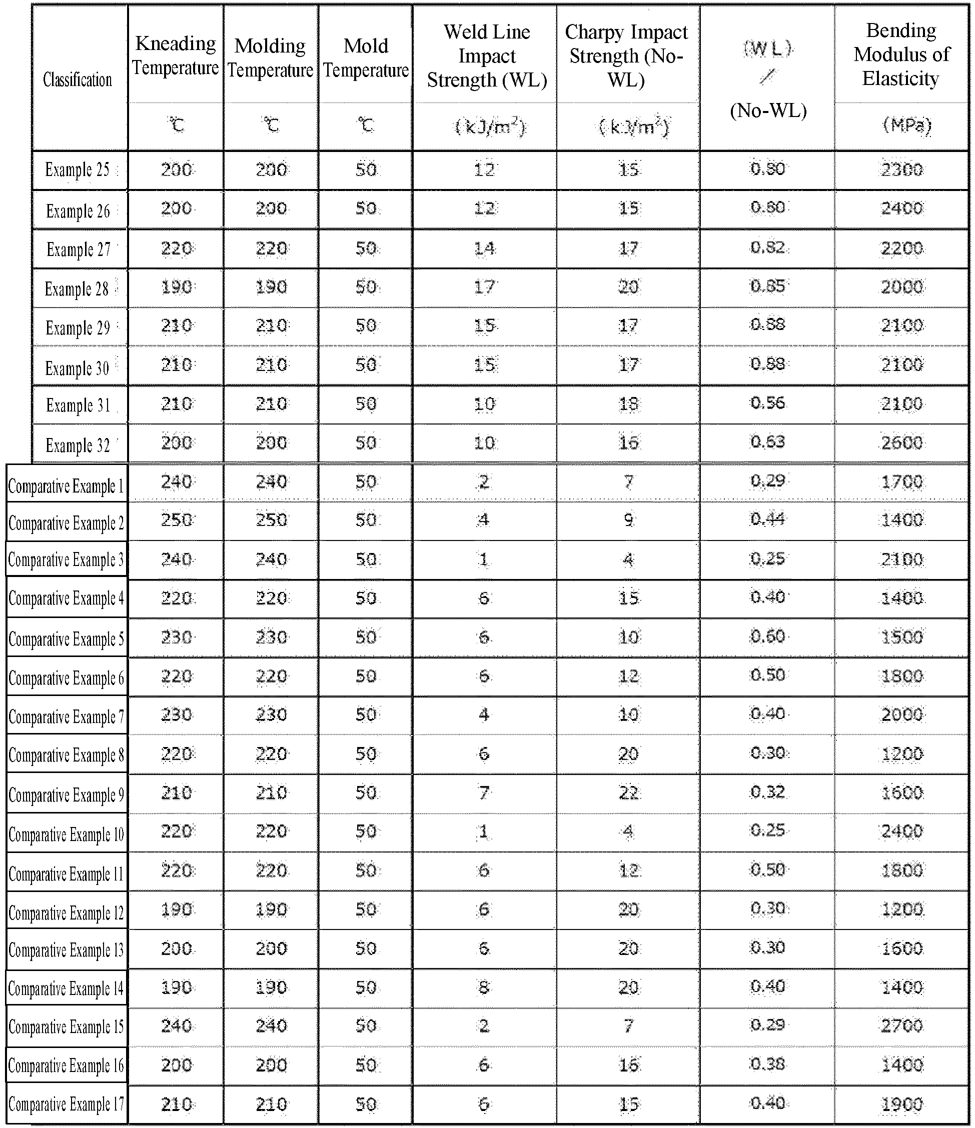

Note that in Table 6 and Table 7, "AC" represents a cellulose acylate, "PLA" represents a polylactic acid, "ES" represents an ester compound, "C/S" represents a polymer with a core-shell structure, and "Ac" represents a (meth)acrylic polymer.

In Table 8 and Table 9, "WL/No-WL" represents a value obtained by dividing weld line impact strength by Charpy impact strength (weld line impact strength/Charpy impact strength).

Based on the foregoing results, it is clear that the evaluation results of weld line impact strength in the present embodiment are favorable compared to the comparative examples.

The present invention has been described in detail and with reference to defined embodiments; however, various changes and modifications may be made without departing from the spirit and scope of the present invention.

The present application claims priority based on a Japanese Patent Application filed on March 6, 2018 (JP 2018-039551).

## Claims

1. A resin composition, comprising:
a cellulose acylate including at least one type selected from cellulose acetate propionate and cellulose acetate butyrate,
a polylactic acid,
an ester compound having a molecular weight of 250 or more and 2,000 or less, and
a polymer with a core-shell structure having a core layer and a shell layer including a (meth)acrylic polymer on the surface of the core layer, wherein:
the ratio ((B)/(A)) of the mass of the polylactic acid (B) to the mass of the cellulose acylate (A) is 0.03 or more and 0.5 or less,
the ratio ((C)/(A)) of the mass of the ester compound (C) to the mass of the cellulose acylate (A) is 0.03 or more and 0.15 or less, and
the ratio ((D)/(A)) of the mass of the polymer with a core-shell structure (D) to the mass of the cellulose acylate (A) is 0.01 or more and 0.1 or less.

2. The resin composition according to claim 1, wherein the weld line impact strength is 10 kJ/m² or more, and a value obtained by dividing the weld line impact strength by the Charpy impact strength is 0.5 or more.

3. A resin composition, comprising:
a cellulose acylate including at least one type selected from cellulose acetate propionate and cellulose acetate butyrate,
a polylactic acid,
an ester compound having a molecular weight of 250 or more and 2,000 or less, and
a polymer with a core-shell structure having a core layer and a shell layer including a (meth)acrylic polymer on the surface of the core layer, wherein:
the weld line impact strength is 10 kJ/m² or more, and a value obtained by dividing the weld line impact strength by the Charpy impact strength is 0.5 or more.

4. The resin composition according to any one of claims 1 to 3, wherein the ester compound is a fatty acid ester compound.

5. The resin composition according to claim 4, wherein the fatty acid ester compound is a compound containing an adipate.

6. The resin composition according to any one of claims 1 to 5, further comprising a (meth)acrylic polymer not contained in the shell layer.

7. The resin composition according to claim 6, wherein the (meth)acrylic polymer not contained in the shell layer is a polymer having a structural unit derived from an alkyl (meth)acrylate, and the ratio ((E)/(A)) of the mass of the polymer having a structural unit (E) derived from the alkyl (meth)acrylate to the mass of the cellulose acylate (A) is 0.01 or more and 0.1 or less.

8. The resin composition according to claim 6 or 7, wherein the average molecular weight of the (meth)acrylic polymer not contained in the shell layer is 30,000 or less.

9. The resin composition according to any one of claims 1 to 8, wherein the (meth)acrylic polymer contained in the shell layer of the polymer with a core-shell structure includes an alkyl (meth)acrylate wherein the number of carbon atoms in the alkyl chain is 1 or more and 8 or less.

10. The resin composition according to any one of claims 1 to 9, wherein the (meth)acrylic polymer contained in the shell layer of the polymer with a core-shell structure includes a copolymer of two or more types of an alkyl (meth)acrylate wherein the number of carbon atoms in the alkyl chains is different.

11. A resin-molded body, comprising the resin composition according to any one of claims 1 to 10.

12. The resin-molded body according to claim 11, wherein the resin-molded body is an injection-molded body.
